# FASCICULE DE BREVET EUROPEEN

(11) **EP 3 504 015 B1**
(45) Date de publication et mention de la délivrance du brevet: **26.03.2025**
(21) Numéro de dépôt: 17780205.5
(22) Date de dépôt: 23.08.2017
(51) Int. Cl.: B21D 51/54, F42B 5/285, F42B 5/29

(54) **PROCÉDÉ DE FABRICATION DE DOUILLES MULTI COMPOSANTS**
VERFAHREN ZUR HERSTELLUNG VON HÜLSEN AUS MEHREREN BESTANDTEILEN
METHOD FOR PRODUCING MULTI-COMPONENT CASES

(30) Priorité: 23.08.2016 CH 10772016
(43) Date de publication de la demande: 03.07.2019
(73) Titulaire: Rabuffo SA, 1125 Monnaz (CH)
(72) Inventeur: GAIDE, Albert, 1125 Monnaz (CH)
(74) Mandataire: reuteler & cie SA
(86) Numéro de dépôt international: PCT/IB2017/055079
(87) Numéro de publication internationale: WO 2018/037352

(56) Documents cités:
- EP-A1- 2 543 954
- EP-B1- 2 552 619
- GB-A- 129 207
- GB-A- 552 441

## Description

### Introduction et domaine de l'invention

La fabrication de douilles de munition à balles, par exemple pour des armes à feu, se fait, dans tout le monde et depuis plus d'un siècle, par la déformation mécanique d'une seule pièce métallique faite de laiton, d'acier ou d'autres alliages.

Les procédés de fabrication liés à ce mode de production comportent de nombreuses opérations d'étampage, d'emboutissage, d'enfonçage et d'étirement, pour ne citer que les principales, qui sont entrecoupées de traitements thermiques et/ou chimiques destinés à relaxer les tensions générées dans la matière traitée et ôter l'oxydation produite dans certain cas par le traitement thermique.

Les importants moyens de fabrication qui sont nécessaires impliquent de grosses presses, des installations de traitement thermique, des installations de traitement chimique, des machines d'usinage ainsi que des systèmes de transfert et d'alimentation.

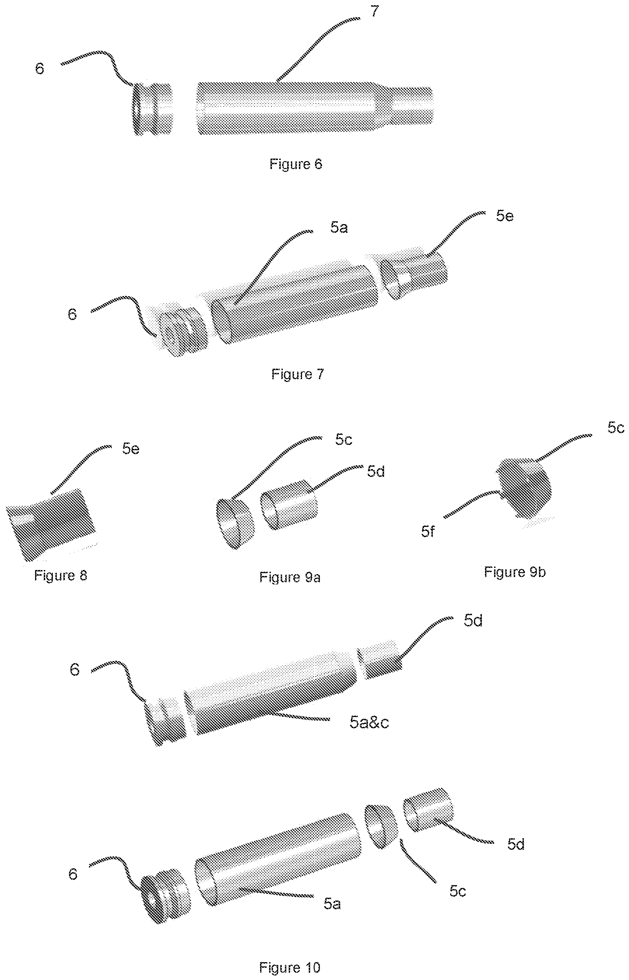

Ces méthodes de fabrication présentent de nombreux inconvénients. Les investissements sont importants, les traitements chimiques exigent des mesures de protection contre la pollution des eaux, les installations sont souvent conçues pour des calibres spécifiques. Ces procédés de fabrication ne permettent pas de produire des douilles dont l'épaisseur de paroi est uniforme comme le permettrait la fabrication de douilles multi-composants, par exemple illustrés dans les figures 6 à 10, ayant recours à des feuillards minces, assemblés au moyen de procédés de soudure ou de procédés mécaniques bien connus et plus simples à mettre en œuvre.

Le document EP2552619B1 décrit un procédé de fabrication d'une douille de cartouche par le formage à froid de tuyaux avec soudure ou sans soudure.

### Principe de la présente invention

Un but de l'invention est d'améliorer les procédés de fabrication de douilles de munition à balles et de produire des douilles à parois minces, plus légères et offrant un volume interne plus important permettant d'augmenter la quantité de propulsant et ainsi la portée.

Plus précisément, un but de la présente invention est donc de proposer des méthodes de fabrication simples, efficaces et surtout moins coûteuses de douilles de munition à balles réalisées en assemblant deux ou plusieurs éléments produits de façon optimisée.

Un autre but de la présente invention est de simplifier la manutention des éléments utilisés et de réduire la manutention d'éléments unitaires, comme il est nécessaire de le faire dans les installations courantes pour alimenter les presses et autres stations d'usinage.

Un autre but de la présente invention est de réduire de manière significative les investissements nécessaires pour la fabrication de douilles de munition à balles tout en maintenant des cadences de production élevées.

Selon un mode d'exécution, l'invention concerne un procédé de fabrication de douilles de munitions à balles, ladite douille comprenant au moins une partie principale appelée corps mais que nous appellerons également "chemise" de forme conique, un épaulement, un embout et un culot, procédé dans lequel la chemise et/ou l'épaulement et/ou l'embout est (sont) formé(s) à partir d'au moins un feuillard mince en conformant ledit ou lesdits feuillard(s) sur une matrice (également nommée insert) reproduisant au moins la conicité et/ou l'épaulement et /ou l'embouchure caractéristiques de la douille.

Dans un mode d'exécution, la chemise, l'épaulement et l'embouchure sont formés à partir d'un même feuillard ou d'une même pièce.

Dans un mode d'exécution, la chemise, l'épaulement et l'embouchure sont formés à partir de feuillards ou de pièces différents. Les matières de chaque feuillard ou pièce peuvent varier ou non.

Dans un mode d'exécution, le feuillard ou la pièce avant conformation a la forme d'un tube.

Dans un mode d'exécution, le tube est formé d'un feuillard plan qui est conformé en forme de tube.

Dans un mode d'exécution, le feuillard conformé en tube est fermé par une soudure réalisée par des moyens de soudure tels que faisceau d'électrons, laser ou autre équivalent Selon l'invention une pluralité de matrice(s) sont glissé(s) et emboitées les unes dans les autres dans le tube formant la chemise de la douille avant la conformation.

Dans un mode d'exécution, le tube est conformé par des moyens mécaniques et/ou électromagnétiques et/ou pneumatiques et/ou hydrauliques.

Dans un mode d'exécution, la forme de la matrice et l'écartement avec la matrice suivante sont conçus de telle manière que l'on peut contrôler l'épaisseur de la paroi au niveau de l'embouchure de la douille.

Dans un mode d'exécution, les matrices ou inserts peuvent être composés de différents éléments, ces éléments peuvent être de matières différentes et que certains éléments peuvent comporter des dégagements radiaux ou longitudinaux adaptés aux modes de soudure.

Dans un mode d'exécution, la matière du feuillard peut être de l'acier inoxydable, de l'acier normal, du laiton, de l'aluminium, un alliage ou une autre matière équivalente etc...

Dans un mode d'exécution, la chemise de douille est réalisée par la soudure de deux demi-coques, chacune étant une pièce conformée.

Dans un mode d'exécution, les demi-coques conservent leurs bords d'étampage.

Dans un mode d'exécution, les demi-coques sont débarrassées des bords d'étampage tout de suite après la soudure

Dans un mode d'exécution, les demi-coques sont faites à partir de feuillards de diverses matières comme l'acier inoxydable, l'acier normal, le laiton, l'aluminium par exemple.

Dans un mode d'exécution, les demi-coques sont soudées l'une à l'autre par une des moyens de soudure connus, tels que le faisceau d'électrons, le laser, etc.

Dans un mode d'exécution, les bords d'étampage sont éliminés par une découpe mécanique, par une découpe par jet d'eau, par ébavurage ou par tout autre moyen de coupe connu.

Dans un mode d'exécution, le tube formant le corps de la douille est assemblé à son culot puis il est placé dans une machine d'emboutissage axial, munie d'une jauge concentrique formant matrice/insert et assurant le diamètre intérieur de l'embouchure et d'une contre-forme actionnée, par exemple, par une presse pour déformer le tube et lui donner les caractéristiques de la douille finale

Dans un mode d'exécution, le tube formant le corps de la douille est placé sur un poinçon aux formes adéquates muni d'une jauge concentrique formant matrice/insert et assurant le diamètre intérieur de l'embouchure et en emboutissant le tube au moyen d'une contre-forme actionnée, par exemple, par une presse pour déformer le tube et lui donner les caractéristiques de la douille finale.

Dans un mode d'exécution, l'opération de conformation comprend la conicité et/ou, l'épaulement et/ou l'embouchure tubulaire.

Dans un mode d'exécution, l'invention concerne une douille, par exemple une douille de munition pour arme à feu, obtenue par un procédé tel que décrit dans la présente demande.

### Description détaillée de la présente invention

Des modes d'exécution de la présente invention sont maintenant décrits en référence aux figures dont
La figure 1 illustre une vue en perspective du principe de l'invention selon un premier mode d'exécution.
La figure 1b illustre des moyens connus pour la mise en œuvre selon le premier mode d'exécution de l'invention.
La figure 2 illustre une vue schématique en perspective du principe de l'invention selon un premier mode d'exécution.
La figure 3 illustre une vue schématique en perspective du principe de l'invention selon un premier mode d'exécution.
La figure 4 illustre une vue en perspective du principe de l'invention selon un deuxième mode d'exécution.
La figure 5 illustre une vue en perspective du principe de l'invention selon un deuxième mode d'exécution.
Les figures 6 à 10 illustrent des vues en perspective de divers modes d'exécution de l'invention.
Les figures 11 et 12 illustrent en perspective un mode d'exécution de l'invention.
La figure 13 illustre un procédé selon un mode d'exécution de l'invention.

Dans un premier mode d'exécution, la présente invention consiste notamment à fabriquer d'abord la partie principale de la douille, appelée corps mais que nous appellerons également "chemise", en conformant un tube mince 2 sur des formes rigides 1a représentant le volume interne ainsi que l'épaulement et l'embouchure de la douille appelée aussi collet.

Puis, après avoir extrait des éléments de conformation ou formes (nommées indifféremment "matrice" ou "insert" dans la présente demande) 1a, d'assembler ladite chemise conformée avec un culot 6, conçu à cet effet, par un procédé de soudure ou un procédé d'assemblage mécanique bien connus.

Une des particularités de la présente invention consiste à former les chemises non pas une à une mais en de longues chaînes de plusieurs dizaines, voire même plus d'une centaine de pièces/douilles qui sont conformées puis individualisées par une coupe. Les chaînes sont traitées en tant que telles de façon unitaire puis elles servent de moyen d'alimentations des stations chargées de séparer les éléments, d'extraire les inserts 1a, de présenter les culots 6 et de les souder aux chemises 5, ce qui évite le besoin de charger ces dernières machines individuellement et simplifie l'équipement nécessaire.

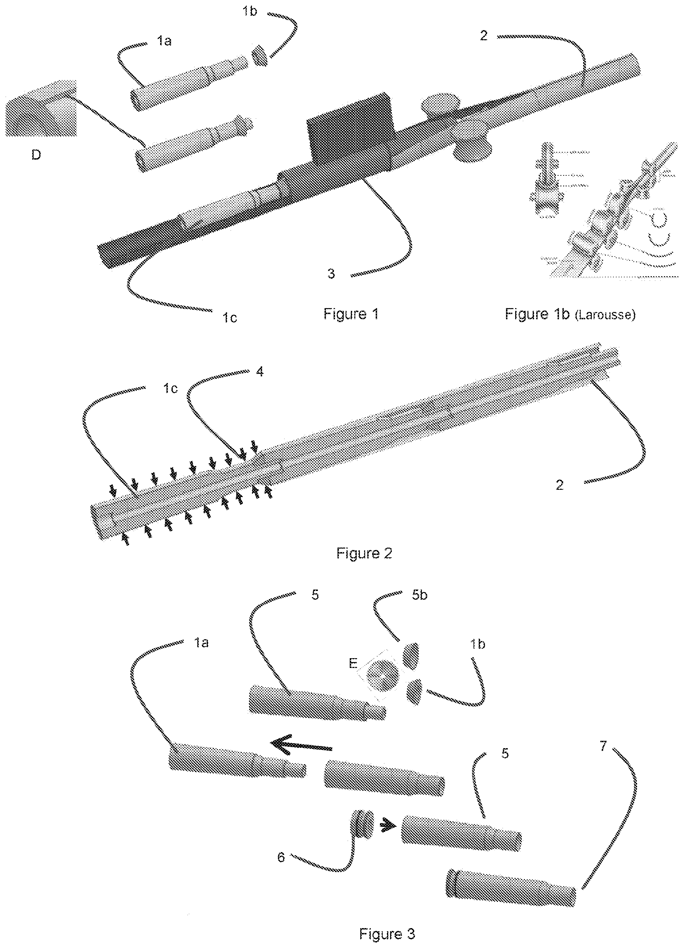

Dans un premier mode d'exécution possible illustré dans les figures 1,2 et 3, les inserts 1c sont glissés au moyen d'un guide d'insertion spécial 3 dans le tube 2 alors que ce dernier subit une opération de roulage qui le fait passer d'une bande plate (dénommée "feuillard") à un cylindre quasiment fermé (comme illustré dans la figure 1a qui est extraite du dictionnaire Larousse et montre comment on peut former un tel cylindre au moyen de galets). Les inserts 1c sont conçus de manière à s'emboiter les uns les autres et à constituer une chaine continue. Au besoin, les parties principales des inserts 1a peuvent comporter une petite saignée réduisant l'incidence sur l'opération de soudure par faisceau d'électrons, ou de soudure laser ou d'un autre procédé équivalent destinée à fermer le tube. Cette saignée est illustrée dans le détail "D" de la figure 1. Dans un tel cas, le dispositif d'insertion des inserts peut être avantageusement équipé d'un guide permettant leur bon alignement.

L'opération décrite ci-dessus peut aussi être réalisée en insérant les inserts 1c dans un long tube mince déjà fermé et soudé. Il faut dans ce cas prévoir un jeu suffisant entre les inserts et le tube fermé pour éviter de déployer des efforts d'insertion importants susceptibles d'endommager ce dernier.

Le tube 2 est initialement fermé par un procédé de soudure connu, comme par exemple la soudure par faisceau d'électrons, ou la soudure laser ou un autre procédé équivalent. Les tubes fermés remplis d'inserts 1c sont ensuite introduits dans une machine de conformation qui va forcer la paroi du tube 2 contre les inserts 1c pour produire la légère conicité, l'épaulement et l'embouchure caractéristiques des douilles de munition 4. Cette opération de conformation peut être réalisée par des moyens mécaniques, ou par des moyens électromagnétiques ou encore par des moyens hydrauliques pour ne citer que quelques exemples non-limitatifs. Cette opération est illustrée dans la figure 2 notamment par les flèches placées autour du tube 2. Une fois tous les éléments du tube conformés, une opération de séparation peut être réalisée par la découpe, au moyen par exemple d'une scie circulaire illustrée par le détail E (dans la figure 3), du tube à la hauteur de la base de chaque insert 1c. La collerette 5b et la rondelle conique 1b sont ainsi éliminés et l'élément comprenant la "chemise" 5 et son insert 1a sont transférés dans une installation spéciale qui éjectera l'insert 1a puis assemblera la "chemise" de douille 5 à son culot 6 pour les passer ensuite dans une station de soudure du culot et de la "chemise" et enfin dans une station de coupe à la longueur de l'embouchure pour constituer une douille complète 7. Ces opérations sont notamment illustrées dans la figure 3.

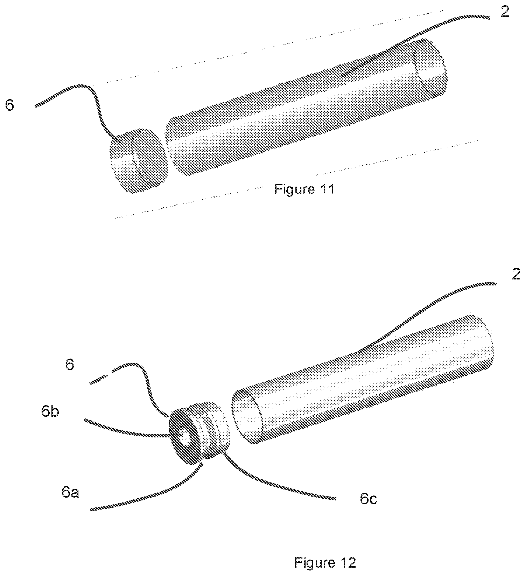

Selon l'exécution du culot 6, celui-ci peut déjà comporter une rainure d'éjection. Dans le cas contraire, cette dernière peut être réalisée dans une station de décolletage conçue à cet effet, voir les figure 11 et 12.

Dans ce mode d'exécution, les inserts 1c sont composés de deux parties concentriques, l'une 1a matérialisant la forme interne de la "chemise" et l'autre 1b de forme conique conçue de telle manière que lors de la conformation du tube 2 par l'un des procédés cités, il est possible de contrôler la variation des épaisseurs de la paroi causées par la déformation. La composition en deux parties des inserts 1c permet de sauvegarder la partie principale 1a lors de la séparation des formes.

Si les modes d'exécution utilisant des soudures sont applicables à toutes sortes de matériaux, la conformation électromagnétique est toutefois limitée aux métaux conducteurs et ne s'applique pas à tous les aciers inoxydables. Des limitations sont aussi à noter dans le cas de binômes susceptibles de provoquer des électrolyses ou autres phénomènes indésirables. En fonction des circonstances et des matières utilisées, il est donc possible de choisir le procédé approprié.

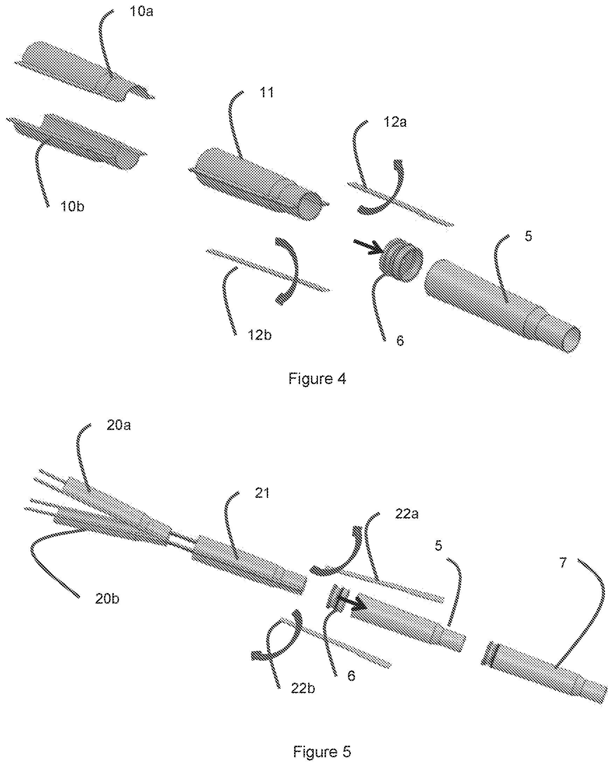

Dans une autre approche de la fabrication de douilles multi-composants selon un deuxième mode d'exécution (illustré dans les figures 4 et 5), il est aussi possible de procéder par un emboutissage de demi-coques 10a et 10b de la figure 4 présentant la conicité, l'épaulement et l'embouchure caractéristiques des douilles de munition également en partant d'une feuille ou bande plane, par exemple de métal. Un tel emboutissage est facile à réaliser avec des moyens courants adaptés à la forme désirée. Dans ce mode, on part donc d'une feuille plane plutôt que d'une feuille conformée en forme de tube, comme dans le premier mode d'exécution mais selon un processus semblable, on amène la feuille dans sa forme finale (tube pour le premier mode d'exécution, demi-coque pour les autres modes d'exécution), par exemple par emboutissage par exemple entre un poinçon et une matrice ayant les formes désirées.

Les demi-coques 10a et 10b peuvent ensuite être assemblées à l'aide de moyens de soudure bien connus comme par exemple le faisceau d'électrons, le laser etc...

Dans un autre mode d'exécution possible (figure 4), les demi-coques 10a et 10b peuvent être séparées des bords d'étampage 12a et 12b et être présentées bord à bord, pour la soudure, par un dispositif mécanique adéquat. Les "chemises" 11 ainsi réalisées peuvent être ensuite logées dans un dispositif de stockage permettant l'alimentation aisée des stations de travail suivantes.

Dans un autre mode d'exécution possible (figure 5), les bords d'étampage 22a et 22b des demi-coques 20a, 20b de la figure 5 peuvent être maintenus et servir de lien entre les parties soudées. L'enchainement ainsi réalisé peut être propice à l'enroulement des pièces sur des tambours bien adaptés offrant à la fois une possibilité de stockage intermédiaire et un moyen d'alimentation des stations de travail suivantes. Les bords d'étampage 22a et 22b peuvent être détachés des demi-coques 20a, 20b lors de l'opération d'assemblage de la chemise 5 avec le culot 6 pour former la douille 7. Ce procédé s'applique aussi à la forme d'exécution de la figure 4.

Dans ces modes d'exécution, on peut également utiliser des formes 1a comme dans le premier mode pour assurer un bon alignement des deux demi-coques 10a et 10b (20a, 20b) lors de leur fixation l'une à l'autre.

Dans un autre mode d'exécution, représenté schématiquement par les figures 6 à 10, il est aussi imaginable de réaliser la douille 7 par l'assemblage de deux ou plus de deux éléments individuels, chacun ayant été formé (ou conformé) au préalable de sorte que l'étape finale du procédé n'est qu'un assemblage de parties préparées et formées: un culot usiné 6, un tube conique 5, un épaulement 5c, un embout de cartouche 5d représentés dans la figure 9a, ou un épaulement avec embout de cartouche 5e, pour ne citer que les principales combinaisons que permettent les procédés de soudure ou les procédés mécaniques bien connus.

Dans une autre exécution qui est représentée schématiquement dans la figure 9b, l'épaulement 5c peut être avantageusement doté d'éléments de centrage 5f permettant d'aligner facilement le corps conique 5c et la chemise 5a pour faciliter leur assemblage. Il peut en être de même pour l'embout 5d afin de faciliter sont assemblage de l'épaulement 5c.

Parmi les moyens d'assemblage qui peuvent entrer en ligne de compte on peut citer, sans être exclusifs: la soudure par faisceau d'électrons, la soudure plasma, la soudure par friction, le brasage et le sertissage etc... et autres procédés équivalents permettant l'assemblage de pièces de forme diverses, et de matières diverses.

De préférence, dans les modes d'exécution décrits, le corps de douille cylindrique 5 est formé à partir d'un feuillard de métal 2 qui est roulé pour réaliser une forme tubulaire, les deux bords du feuillard adjacents étant ensuite fixés ensemble, par exemple par soudage. D'autres variantes sont possibles selon ce qui est décrit et illustré dans la présente demande. Les matières utilisées pour les différentes parties sont de préférence, mais non exclusivement, des métaux.

Dans un autre mode d'exécution, le tube 2 formant le corps de la douille 5 peut être préalablement conformé axialement pour présenter une ou toutes les caractéristiques de la douille finale 7: conicité, épaulement et embouchure destinée à recevoir le projectile.

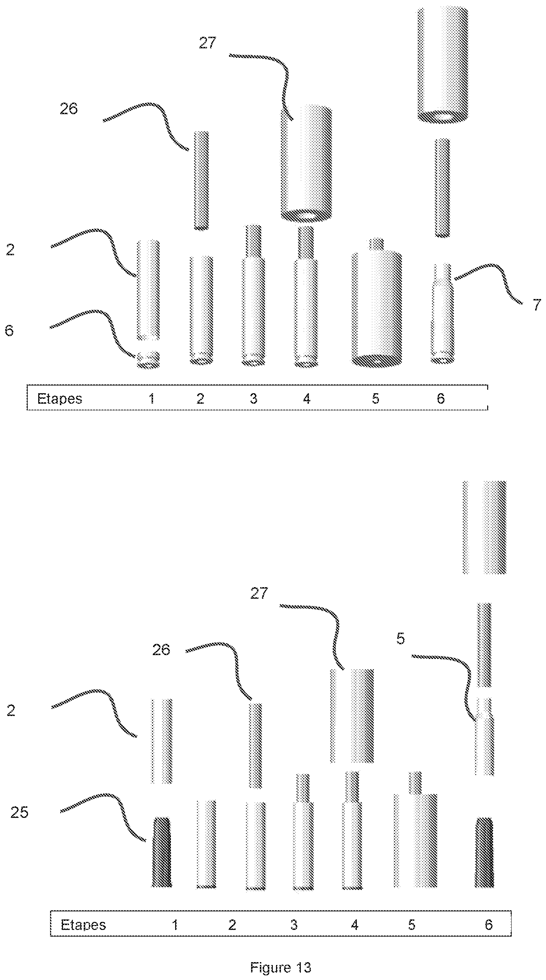

Dans cet exemple d'exécution de la présente invention, une première étape, illustrée dans la figure 11, est réalisée en assemblant, au moyen de procédés de soudure ou de procédés mécaniques connus, un corps de douille, formé d'un tube à paroi mince 2 et un culot 6 constitué d'une rondelle cylindrique. On réalise ainsi, en une opération, une ébauche de douille qui nécessite normalement plusieurs opérations d'enfonçage et/ou d'étirage, de traitement thermique et de traitement chimique. Cette ébauche peut ensuite être conformée axialement selon les procédés conventionnels de formage de la conicité, de l'épaulement et de l'embout des douilles comme l'illustre la séquence supérieure de la figure 13. Le poinçon 26 permet d'assurer le diamètre intérieur de l'embouchure tandis que la contre-forme 27 produit la conicité, l'épaulement et l'embouchure pour donner lieu à une douille complète. Le dessin du haut de la figure 13 illustre les étapes «traditionnelles» de formage axial. Ainsi, l'étape 1 est la fixation du tube 2 et du culot 6, les étapes 2 et 3 l'insertion de la jauge 26 dans le tube 2 assemblé au culot 6, l'étape 3 l'abaissement de la contre-forme 27 pour déformer le tube 2 et lui donner la conformation souhaitée (étape 5) et en 6 le retrait de la contre-forme 27 et de la jauge 26.

Dans une exécution ayant recours à des procédés semblables, par exemple, comme l'illustrent les étapes successives de la figure 13 (dessin du bas), le tube 2 formant le corps de la douille est inséré sur une matrice aux formes adéquates 25 représentant la conicité et l'épaulement internes de la douille. Une jauge concentrique 26 formant un insert (comme décrit ci-dessus) assurant le diamètre intérieur de l'embouchure est insérée dans la matrice 25 avant d'emboutir le tube 2 au moyen d'une contre-forme 27 actionnée par une presse pour déformer le tube 2 et lui donner les caractéristiques de la chemise de douille finale 5. Un extracteur, non représenté dans le dessin, permet d'extraire la chemise de douille conformée 5 de la matrice 25. Cette opération de conformation peut comprendre la conicité 5a, l'épaulement 5c et l'embouchure tubulaire 5d ou se limiter à la conicité 5a et l'épaulement 5c ou encore se limiter à la seule conicité de la douille 5a (voir en figure 6 à 10). Ces opérations peuvent aussi être effectuées par d'autres moyens mécaniques agissant, par exemple, radialement comme décrit ci-dessus.

Dans un mode d'exécution (illustré en figure 12), la rondelle cylindrique 6 appelée à former le culot de la douille 2 peut être dotée d'une gorge d'éjection 6a et du logement destiné à recevoir l'amorce 6b ainsi qu'un éventuel épaulement 6c facilitant le centrage du corps 2 de la douille. De telles opérations peuvent être réalisées par exemple au moyen de procédés de décolletage, d'emboutissage ou d'usinage bien connus sur la rondelle cylindrique initiale et peuvent facilement être automatisées.

Bien entendu le procédé de la figure 13 peuvent s'appliquer au tube 2 pour former la douille en une pièce ou à des parties de douille qui seront ensuite assemblées (voir les figures 6 à 10 et la description ci-dessus).

Les modes d'exécution de l'invention sont donnés à titre d'exemple illustratifs et ne doivent pas être considérés comme limitatifs. Ils peuvent être combinés entre eux ou faire appel à des moyens équivalents en fonction des circonstances.

Toutes les matières appropriées peuvent être utilisées pour la feuille/bande initiale et parties de la douille: acier inoxydable, acier normal, laiton, aluminium, alliage(s) ou une autre matière équivalente appropriée et convenant à l'objet à réaliser etc...

La douille peut être de n'importe quel calibre et pour une utilisation dans tout type d'arme sans limitation,

## Revendications

1. Procédé de fabrication de douilles (7) de munitions à balles, ladite douille comprenant au moins une partie principale de forme conique constituant une chemise (5, 5a), un épaulement (5c), un embout (5d, 5e) et un culot (6), procédé dans lequel la chemise, l'épaulement et l'embout sont formés à partir d'au moins un feuillard mince en conformant ledit ou lesdits feuillard(s) sur une matrice reproduisant la conicité et l'épaulement et l'embouchure caractéristiques de la douille, **caractérisée en ce que** le feuillard avant conformation a la forme d'un tube (2) et qu'une pluralité de matrices (25) sont glissées et emboitées les unes dans les autres dans ledit tube avant la conformation.

2. Procédé de fabrication selon la revendication précédente, dans lequel la chemise (5, 5a), l'épaulement (5c) et l'embouchure (5d, 5e) sont formés à partir d'un même feuillard.

3. Procédé de fabrication selon la revendication 1, dans lequel la chemise (5, 5a), l'épaulement (5c) et l'embouchure (5d, 5e) sont formés à partir de feuillards différents.

4. Procédé de fabrication selon l'une des revendications précédentes dans lequel le tube (2) est formé d'un feuillard plan qui est conformé en forme de tube.

5. Procédé de fabrication selon la revendication précédente, dans lequel le feuillard conformé en tube (2) est fermé par une soudure réalisée par des moyens de soudure tels que faisceau d'électrons, laser ou autre.

6. Procédé de fabrication selon l'une des revendications précédentes dans lequel le tube (2) est conformé sur la matrice par des moyens mécaniques, électromagnétiques, pneumatiques ou hydrauliques.

7. Procédé de fabrication selon l'une des revendications précédentes, dans lequel la forme des matrices (25) et l'écartement avec la matrice suivante sont conçus de telle manière que l'on peut contrôler l'épaisseur de la paroi au niveau de l'embouchure (5d, 5e) de la douille (7).

8. Procédé de fabrication selon les revendications précédentes dans lequel les matrices sont composées de différents éléments et que certains desdits éléments comportent des dégagements radiaux ou longitudinaux adaptés aux modes de soudure.

9. Procédé de fabrication selon l'une des revendications précédentes dans lequel la matière du feuillard est en acier inoxydable, acier normal, laiton, aluminium, ou un alliage d'un de ces matières une autre matière équivalente.

10. Procédé de fabrication selon l'une des revendications précédentes, dans lequel, le tube formant le corps de la douille est assemblé à son culot puis il est placé dans une machine d'emboutissage axial, munie d'une jauge concentrique (26) formant matrice/insert et assurant le diamètre intérieur de l'embouchure et d'une contre-forme (27) actionnée par une presse pour déformer le tube et lui donner les caractéristiques de la douille finale.

11. Procédé de fabrication selon l'une des revendications 1 à 9, dans lequel le tube formant le corps de la douille est placé sur un poinçon aux formes adéquates muni d'une jauge concentrique (26) formant matrice et assurant le diamètre intérieur de l'embouchure (5d, 5e) et en emboutissant le tube au moyen d'une contre-forme (27) actionnée par une presse pour déformer le tube et lui donner les caractéristiques de la douille finale.

12. Procédé selon la revendication précédente, dans lequel l'opération de conformation comprend la conicité, l'épaulement et l'embouchure tubulaire.

## Patentansprüche

1. Verfahren zur Herstellung von Hülsen (7) für Kugelmunition, wobei die Hülse mindestens einen konisch geformten Hauptteil, der einen Mantel (5, 5a) bildet, eine Schulter (5c), eine Mündung (5d, 5e) und einen Boden (6) umfasst, wobei bei dem Verfahren der Mantel, die Schulter und die Spitze aus mindestens einem dünnen Band gebildet sind, indem das Band oder die Bänder auf einer Matrize geformt werden, die die charakteristische Konizität und Schulter und Mündung der Hülse nachbildet, **dadurch gekennzeichnet, dass** das Band vor dem Formen die Form eines Rohrs (2) hat und dass eine Vielzahl von Matrizen (25) vor dem Formen in dem Rohr ineinander geschoben und eingerastet werden.

2. Herstellungsverfahren nach vorhergehendem Anspruch, wobei der Mantel (5, 5a), die Schulter (5c) und die Mündung (5d, 5e) aus demselben Band geformt werden.

3. Herstellungsverfahren nach Anspruch **1,** wobei der Mantel (5, 5a), die Schulter (5c) und die Mündung (5d, 5e) aus verschiedenen Bändern geformt werden.

4. Herstellungsverfahren nach einem der vorhergehenden Ansprüche, wobei das Rohr (2) aus einem ebenen Band gebildet wird, das in die Form eines Rohrs geformt wird.

5. Herstellungsverfahren nach vorhergehendem Anspruch, wobei das zu einem Rohr (2) geformte Band durch eine Schweißnaht geschlossen wird, die mit Schweißmitteln wie Elektronenstrahl, Laser oder anderen Mitteln hergestellt wird.

6. Herstellungsverfahren nach einem der vorhergehenden Ansprüche, wobei das Rohr (2) auf der Matrize durch mechanische, elektromagnetische, pneumatische oder hydraulische Mittel geformt wird.

7. Herstellungsverfahren nach einem der vorhergehenden Ansprüche, wobei die Form der Matrizen (25) und der Abstand zu der nächsten Matrize so gestaltet sind, dass die Wandstärke an der Mündung (5d, 5e) der Hülse (7) gesteuert werden kann.

8. Herstellungsverfahren nach den vorhergehenden Ansprüchen, wobei die Matrizen aus verschiedenen Elementen zusammengesetzt sind und einige dieser Elemente radiale oder längliche Aussparungen aufweisen, die an die Schweißarten angepasst sind.

9. Herstellungsverfahren nach einem der vorhergehenden Ansprüche, wobei das Material des Bandes rostfreier Stahl, normaler Stahl, Messing, Aluminium oder eine Legierung aus einem dieser Materialien oder ein anderes gleichwertiges Material ist.

10. Herstellungsverfahren nach einem der vorhergehenden Ansprüche, wobei das Rohr, das den Körper der Hülse bildet, mit seinem Boden zusammengesetzt und dann in eine axiale Tiefziehmaschine eingesetzt wird, die mit einer konzentrischen Lehre (26), die eine Matrize/einen Einsatz bildet und den Innendurchmesser der Mündung sicherstellt, und mit einer Gegenform (27) versehen ist, die von einer Presse betätigt wird, um das Rohr zu verformen und ihm die Merkmale der endgültigen Hülse zu verleihen.

11. Herstellungsverfahren nach einem der Ansprüche 1 bis 9, wobei das Rohr, das den Körper der Hülse bildet, auf einen entsprechend geformten Stempel gelegt wird, der mit einer konzentrischen Lehre (26) versehen ist, die eine Matrize bildet und den Innendurchmesser der Mündung (5d, 5e) sicherstellt, und das Rohr mit Hilfe einer von einer Presse betätigten Gegenform (27) tiefgezogen wird, um das Rohr zu verformen und ihm die Merkmale der endgültigen Hülse zu verleihen.

12. Verfahren nach vorhergehendem Anspruch, wobei der Formgebungsvorgang die Konizität, die Schulter und die Rohrmündung umfasst.

## Claims

1. A method for manufacturing bullet ammunition casings (7), said casing comprising at least one tapered main portion constituting a jacket (5, 5a), a shoulder (5c), a mouth end (5d, 5e) and a cup (6), method in which the jacket, the shoulder and the end piece are formed from at least one thin strip by shaping said strip(s) on a die reproducing the taper and the shoulder and the mouth characteristic of the casing, **characterized in that** the strip before shaping has the shape of a tube (2) and that a plurality of dies (25) are slid and interlocked into each other in said tube before the shaping.

2. The manufacturing method according to the preceding claim, wherein the jacket (5, 5a), the shoulder (5c) and the mouth end (5d, 5e) are formed from the same strip.

3. The manufacturing method according to claim 1, wherein the jacket (5, 5a), the shoulder (5c) and the mouth end (5d, 5e) are formed from different strips.

4. The manufacturing method according to any of the preceding claims, wherein the tube (2) is formed of a planar strip which is shaped as a tube.

5. The manufacturing method according to the preceding claim, wherein the strip shaped as a tube (2) is closed by a weld carried out by welding means such as an electron beam, laser or the like.

6. The manufacturing method according to any of the preceding claims, wherein the tube (2) is shaped on the die by mechanical, electromagnetic, pneumatic or hydraulic means.

7. The manufacturing method according to any of the preceding claims, wherein the shape of the dies (25) and the spacing with the following die are designed in such a way that the thickness of the wall at the level of the mouth (5d, 5e) of the casing (7) can be controlled.

8. The manufacturing method according to the preceding claims, wherein the dies are composed of different elements and that some of said elements include radial or longitudinal clearances adapted to the welding modes.

9. The manufacturing method according to any of the preceding claims, wherein the material of the strip is made of stainless steel, normal steel, brass, aluminum, or an alloy of one of these materials or another equivalent material.

10. The manufacturing method according to any of the preceding claims, wherein the tube forming the body of the casing is assembled to its cup and then it is placed in an axial stamping machine, equipped with a concentric gauge (26) forming a die/insert and ensuring the internal diameter of the mouth and a counter-form (27) actuated by a press to deform the tube and give it the characteristics of the final casing.

11. The manufacturing method according to any of claims 1 to 9, wherein the tube forming the body of the casing is placed on a punch with suitable shapes equipped with a concentric gauge (26) forming a die and ensuring the internal diameter of the mouth (5d, 5e) and by stamping the tube by means of a counter-form (27) actuated by a press to deform the tube and give it the characteristics of the final casing.

12. The manufacturing method according to the preceding claim, wherein the shaping operation comprises the taper, the shoulder and the tubular mouth.
